# EUROPEAN PATENT SPECIFICATION

(11) **EP 2 599 641 B1**
(45) Date of publication and mention of the grant of the patent: **10.06.2015**
(21) Application number: 13000963.2
(22) Date of filing: 07.08.2007
(51) Int. Cl.: B60B 27/00, B21J 5/06, B21K 1/12, F16C 19/18, F16C 33/64

(54) **Bearing unit raceway ring member, bearing unit, and method and apparatus for manufacturing bearing unit raceway ring member**
Lagerbahnringeinheitelement, Lagereinheit und Verfahren und Vorrichtung zur Herstellung eines Lagerbahnringeinheitselementes
Unité d'élément de bague à chemin de roulement, unité de palier et procédé et appareil de fabrication d'un élément de bague à chemin de roulement de l'unité de roulement

(30) Priority: 07.08.2006 JP 2006214744; 21.08.2006 JP 2006224553; 21.08.2006 JP 2006224554; 23.08.2006 JP 2006226849
(43) Date of publication of application: 05.06.2013
(62) Divisional of application: 07792081.7
(73) Proprietor: NSK Ltd., Tokyo 141-8560 (JP)
(72) Inventor: Kobayashi, Kazuto, Fujisawa-shi Kanagawa, 251-8501 (JP); Ootsuka, Kiyoshi, Fujisawa-shi Kanagawa, 251-8501 (JP); Wakabayashi, Tatsuo, Fujisawa-shi Kanagawa, 251-8501 (JP); Yasuda, Yuu, Fujisawa-shi Kanagawa, 251-8501 (JP); Nagano, Masato, Fujisawa-shi Kanagawa, 251-8501 (JP); Nagai, Kenichi, Fujisawa-shi Kanagawa, 251-8501 (JP)
(74) Representative: Grünecker Patent- und Rechtsanwälte PartG mbB

(56) References cited:
- EP-A2- 1 647 418
- JP-A- H09 276 975
- JP-A- 2006 142 983

## Description

### Technical Field

The present invention relates to a method for manufacturing a bearing unit raceway ring member, according to the preamble of claim 1 and as it is disclosed in EP 1647418A.

### Background Art

Conventionally, there have been known various types of bearing units for supporting a wheel of a motor vehicle (for example, a disc wheel) rotationally on a vehicle body (for example, a suspension system (a suspension) (for example, refer to Patent Document No. 1). For example, a bearing unit for a drive wheel is shown in Fig. 6(a), and the bearing unit includes an outer ring (also referred to as a stationary ring, one of raceway rings, and an outside diameter side raceway ring member) 2 which is fixed to the side of the vehicle body and is held in a non-rotating state at all times, a hub (also referred to as a rotational ring, and the other of the raceway rings) 4 which is provided in such a manner as to face an inside of the outer ring 2 and is connected to the side of the wheel in such a manner as to rotate together with the wheel, and double row of rolling elements 6, 8 which are rotationally built in between the outer ring 2 and the hub 4.

In this case, the outer ring 2 is formed into a hollow cylindrical shape and is disposed in such a manner as to cover an outer circumference of the hub 4, seal members (a lip seal 10a on the wheel side, a pack seal 10b on the vehicle body side) are provided between the outer ring 2 and the hub 4 for hermetically sealing off an interior of the bearing unit. In addition, the lip seal 10a is fixed to a wheel-side fixing surface 2n-1 of the outer ring 2 and is positioned slidably relative to a sliding surface 4n-1 of the hub 4, while the pack seal 10b is fixed to a vehicle body-side fixing surface 2n-2 of the outer ring and is positioned slidably relative to an inner ring 16 (also referred to as a rotational ring constituent element), which will be described later. In addition, while balls are illustrated as the rolling elements 6, 8 in the figure, there may be a case where rollers are used depending upon configurations and types of bearing units.

A connecting flange 2a (also referred to as a fixing flange) is molded monolithically on the outer ring 2 in such a manner as to project outwards from an outer circumferential side thereof. Fixing bolts (not shown) are inserted into fixing holes 2b in the fixing flange 2a to be fastened to the vehicle body side, whereby the outer ring 2 can be fixed to a suspension system (a knuckle), not shown. In addition, a substantially cylindrical hub main body 12 (also referred to as the other of the raceway ring members, an inside diameter side raceway ring member and a spindle), which supports, for example, a disk wheel (not shown) of a motor vehicle and rotates together with the disc wheel, is provided on the hub 4, and a mounting flange 12a (also referred to as a hub flange) to which the disc wheel is fixed is provided on the hub main body 12 in such a manner as to project therefrom.

The mounting flange 12a extends outwards (radially outwards of the hub main body 12) beyond the outer ring 2, and a plurality of hub bolts 14 (also referred to as studs) is provided in the vicinity of an extending edge thereof in such a manner as to be disposed at predetermined intervals along a circumferential direction. In this case, by inserting the plurality of hub bolts 14 into bolt holes (not shown) formed in the disc wheel and being fastened with hub nuts (not shown), the disc wheel can be positioned and fixed to the mounting flange 12a. As this occurs, a radial position of the wheel is implemented by a positioning cylindrical portion (also referred to as a pilot portion) which is provided on a wheel side of the hub main body 12 in such a manner as to project therefrom.

In addition, the annular inner ring 16 (which makes up the hub 4 together with the hub main body 12) is fitted on a vehicle body-side fitting surface 4n-2 of the hub main body 12. In this case, after the inner ring 16 is fitted on the fitting surface 4n-2 to a stepped portion 12b formed thereon in such a state that the rolling elements 6, 8 are held with a cage 18, for example, between the outer ring 2 and the hub 4, a clamping area at a vehicle body-side axial end portion of the hub main body 12 is plastically deformed. Then, the clamping area (axial end portion) 12c is clamped to (is brought into tight contact with) a circumferential end portion 16s of the inner ring 16 therealong, whereby the inner ring can be locked on the hub main body 12.

As this occurs, a state is produced in which a predetermined preload is given to the bearing unit, and in this state, the rolling elements 6, 8 are built in rotationally between the outer ring 2 and the hub 4 so as to be brought into contact with raceway surfaces (outer ring raceway 2s, inner ring raceway 4s) of the outer ring 2 and the hub 4 while forming predetermined contact angles, respectively. In this case, lines of action (not shown) which each connect two contact points intersect the respective raceway surfaces 2s, 4s at right angles while passing through the centers of the rolling elements 6, 8 and intersect each other at one point (a point of action) on a center line of the bearing unit, whereby a back-to-back duplex (DB) bearing is configured.

Note that in the configuration like this, a force acting on the wheel while the motor vehicle is running is all transmitted from the disc wheel to the suspension system via the bearing unit. As this occurs, various types of loads (radial load, axial load, moment load and the like) are caused to act on the bearing unit. However, since the bearing unit is formed into the back-to-back duplex (DB) bearing, high rigidity is maintained with respect to the various types of loads.

In addition, a constant velocity joint (CVJ), not shown, is connected to the bearing unit. Specifically speaking, the constant velocity joint and the bearing unit are connected to each other by bringing an outer ring of the constant velocity joint into abutment with the hub 4 (the clamping area 12c of the hub main body 12) of the bearing unit, causing a spline shaft (not shown) of the constant velocity joint to fit in a spline hole 12h in the hub main body 12 and fixing a leading end of the spline shaft so fitted into the positioning cylindrical portion 12d with a nut (not shown). In this configuration, a driving force of a predetermined torque is transmitted smoothly to the disc wheel via the bearing unit, for example, by a free angular change of the constant velocity joint in association with an angular change of a drive shaft.

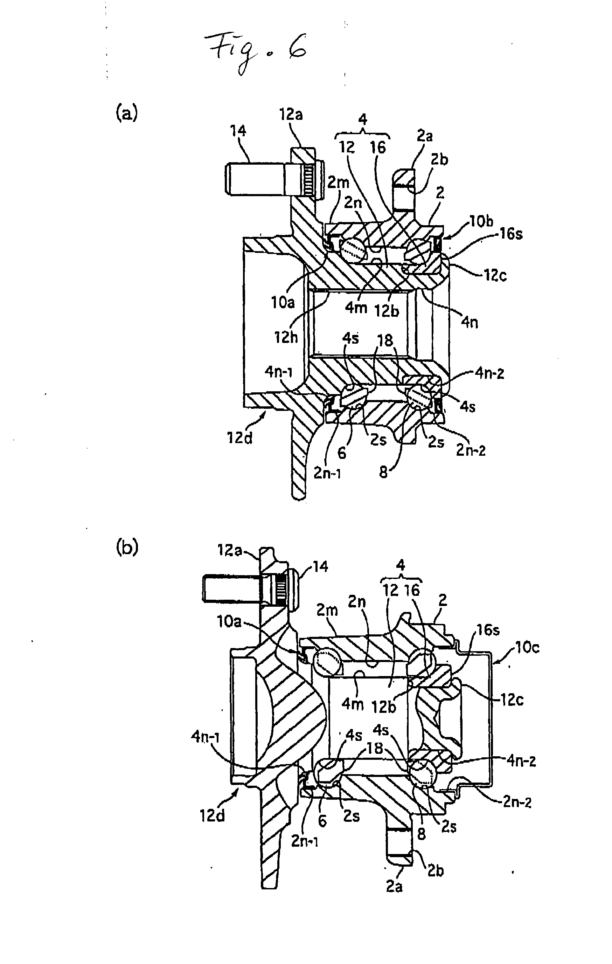

On the other hand, for example, a bearing unit for a driven wheel is shown in Fig. 6(b). In the bearing unit, a spline hole is not provided in a central portion of a hub main body 12. In addition, as seal members for hermetically sealing off an interior of the bearing unit, a cover 10c is provided on the side of a vehicle body in place of the pack seal. The cover 10c is formed into a disc shape so as to hermetically seal off the interior of the bearing unit on the side of the vehicle body from the outside of the bearing unit and is fixed to a fixing surface 2n-2 of an outer ring 2 at a proximal end thereof. Note that since the other configurations of this bearing unit are the same as those of the bearing unit (Fig. 6(a)) for a drive wheel described above, in Fig. 6(b), like reference numerals are given to those like constituent members, and the description thereof will be omitted.

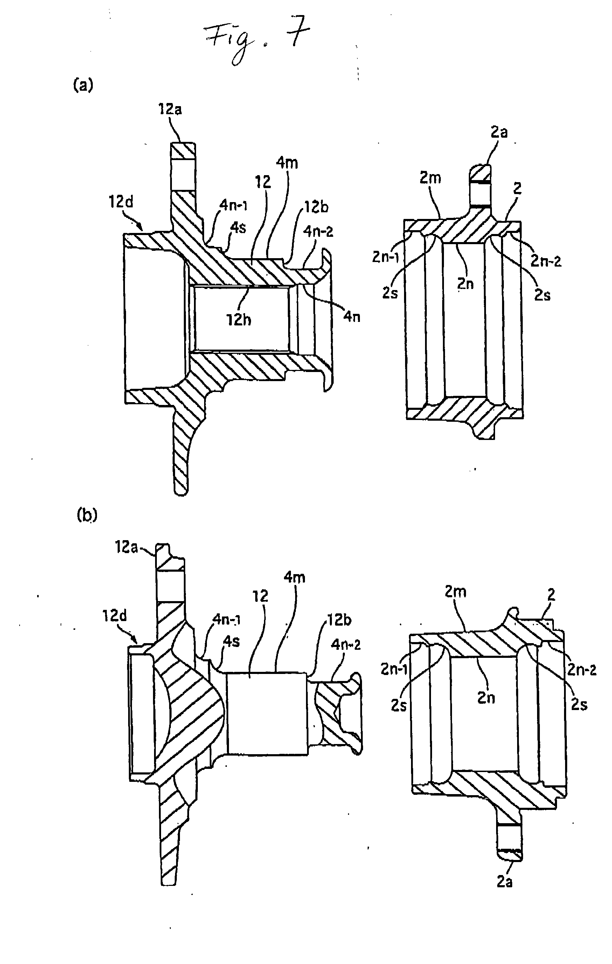

Incidentally, in the bearing units shown in Figs. 6(a) and 6(b), as shown in Figs 7(a) and 7(b), the positioning cylindrical portion 12d is provided on the wheel side of the hub main body 12 which makes up the hub 4, and the mounting flange 12a and the sliding surface 4n-1 of the lip seal 10a, the inner ring raceway 4s and the stepped portion 12b, and the inner ring 16 fitting surface 4n-2 are integrated into the outer circumferential surface 4m of the hub main body 12, whereby the hub main body 12 is formed into the complex configuration.

On the other hand, on the outer ring 2, the connecting flange 2a is integrated into the outer circumferential surface 2m, and the fixing surface 2n-1 of the lip seal 10a or to which the lip seal 10a is fixed and the double row outer ring raceways 2s, and the fixing surface 2n-2 of the seal member (the pack seal 10b in Fig. 6(a), the cover 10c in Fig. 6(b)) or to which the seal member is fixed are integrated into the inner circumferential surface 2n thereof, whereby the outer ring 2 is formed into the complex configuration. In addition, in particular, in the bearing unit for a driving unit in Fig. 6(a), the spline hole 12h is integrated into the inner circumferential surface 4n of the hub main body 12.

Because of this, it has been general practice to form the conventional hub main body 12 through hot forging. In addition, the outer ring 2 is formed into the hollow configuration, and hence, separate punching work becomes necessary for punching out a central portion of a material to form the outer ring 2. In this case, since the processing costs are increased, it has also been general practice to form the conventional ring 2 through hot forging.

It is general in forming the raceway rings 2, 4 through hot forging to obtain final configurations thereof through several steps starting with upsetting a material to punching (trimming) the same, and the material is heated up to about 1100°C before the first step so as to maintain a temperature of A3 transformation point (about 800°C) or higher until the end of the final step. In addition, after the completion of the final step, the material is subjected to slow cooling with a view to preventing the increase in hardness of the material in consideration of mechanical working that will be performed on the material following to the final step. In this case, since oxidation or decarburization is produced on the surface of the material, machining is performed on portions of the material where high dimension accuracy and strength are required.

However, in the machining that is performed on the material, since the surface of the material which is roughened due to the surface being oxidized or decarburized is subjected to chucking (or the material is worked while being grasped by jaws), there occurs a case where the centers of the machined material surface and the hot forged material surface become out of alignment, and there may be caused, for example, a risk that the rotational balance of the hub 4 (the hub main body 12) which is the rotational ring is lost. As this occurs, there may be caused a fear that the rotary performance of the bearing unit becomes difficult to be maintained over a long period of time.

On the other hand, although an increase in thickness of the material to such an extent that nothing is affected by the centers which are out of alignment has been proposed to the outer ring 2 which is the stationary ring, when the proposal is adopted, not only will the material costs be increased but also the weight of the outer ring 2 is increased by the extent that the thickness of the material is so increased. Therefore, it becomes difficult to realize a reduction in overall weight of the bearing unit. In the event that the thickness of the material is increased, the machining allowance for the material when the material is machined is increased, whereby not only is the working time increased but also the working cost is increased, as a result of which the manufacturing cost of the outer ring 2 is increased.

In addition, in slow cooling after hot forging, although the material is maintained in a relatively soft state in consideration of machine working efficiency, in this case, root portions (which are preferably kept hard) of the connecting flange 2a of the outer ring 2 and the mounting flange 12a of the hub main body get soft. When machine working is performed in this state, the connecting flange 2a and the mounting flange 12a are sometimes deformed or inclined due to a pressure applied thereto when machine working is performed thereon. As this occurs, the suspension system (the knuckle) and the disc wheel cannot be fixed accurately and rigidly on the connecting flange 2a and the mounting flange 12a, respectively, as a result of which there is caused a fear that it becomes difficult to stably support the wheel of the motor vehicle on the suspension system.

To avoid this, although the thickness of the root portions of the connecting flange 2a and the mounting flange 12a may be increased to reinforce the root portions, in the event that the thickness is so increased, the overall weight of the bearing unit is increased. Since the bearing unit makes up part of the unsprung load and constitutes a bearing unit which supports the wheel directly, there is caused a fear that the lost of rotation balance and increase in weight of the bearing discussed above are linked up with a reduction in running stability and controllability of the wheel.

In addition, for example, Patent Document No. 2 proposes a technique in which a hub main body 12 is formed by performing cold forging work on a sheet material. According to this technique, the occurrence of oxidation or decarburization on the surface of the forged product can be suppressed, and the finishing accuracy can also be increased. In this case, since there is no need to perform any machining on the material, the conventional problem that the rotation balance of the hub main body 12 is lost becomes difficult to be caused. However, since the hardness of an axial end portion of the hub main body 12 becomes higher than the hardness of a root portion of a mounting flange 12a when the sheet material is subjected to cold forging, clamping work, in which the axial end portion is plastically deformed so as to lock an inner ring 16 on to the hub main body 12, becomes sometimes difficult. In addition, when the sheet material is worked to produce the hub main body 12, it becomes difficult to work the sheet material to project into a brake positioning cylindrical portion or a wheel positioning cylindrical portion, and hence, there has been a need to provide an intermittent pilot on the hub main body as seen in Patent Document No. 2 or to fit a separate pilot on the hub main body.

Then, although the development of a bearing unit is desired which enables the inner ring 16 to be locked on to the hub main body 12 with good efficiency by realizing the facilitation of clamping work, no such bearing unit has ever been made known.

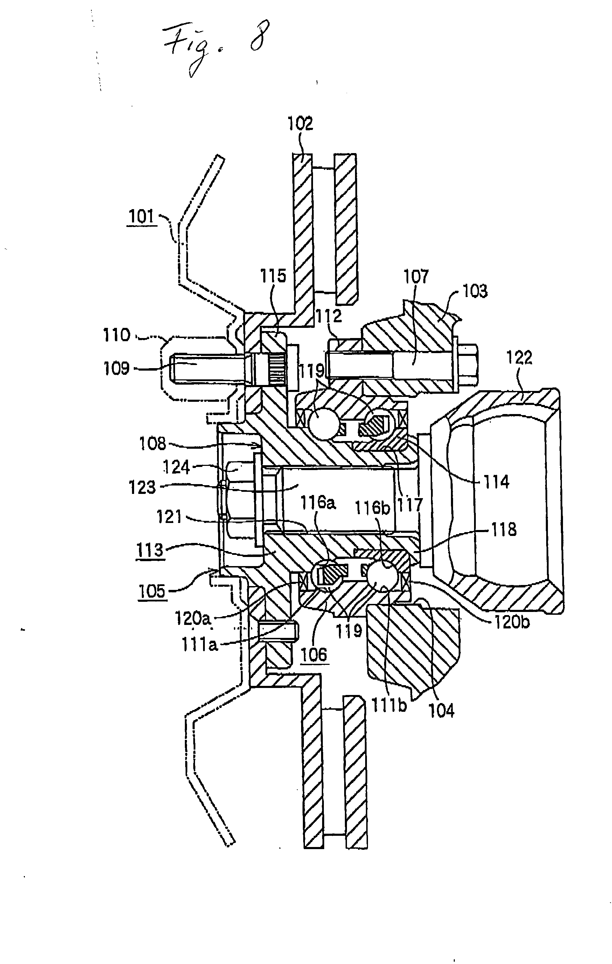

In addition, Fig. 8 shows another bearing unit (also referred to as a wheel supporting hub unit) 105 for a drive wheel. A wheel 101 which makes up a wheel of a motor vehicle and a rotor 102 which is a braking rotary member and which makes up a disc brake which constitutes a brake system are rotatably supported on a knuckle 103 which makes up a suspension system. Namely, an outer ring 106 which makes up a wheel supporting hub unit 105 is fixed into a circular supporting hole 104 portion formed in the knuckle 103 with a plurality of bolts 107. On the other hand, the wheel 101 and the rotor 102 are connected and fixed on to a hub 108 which makes up the wheel supporting hub unit 105 with pluralities of studs 109 and nuts 110. In addition, double row outer ring raceways 111a, 111b and a connecting flange 112 are formed on an inner circumferential surface and an outer circumferential surface of the outer ring 6, respectively. By connecting the connecting flange 112 to the knuckle 103 with the bolts 107, the outer ring 106 is fixed to the knuckle 103.

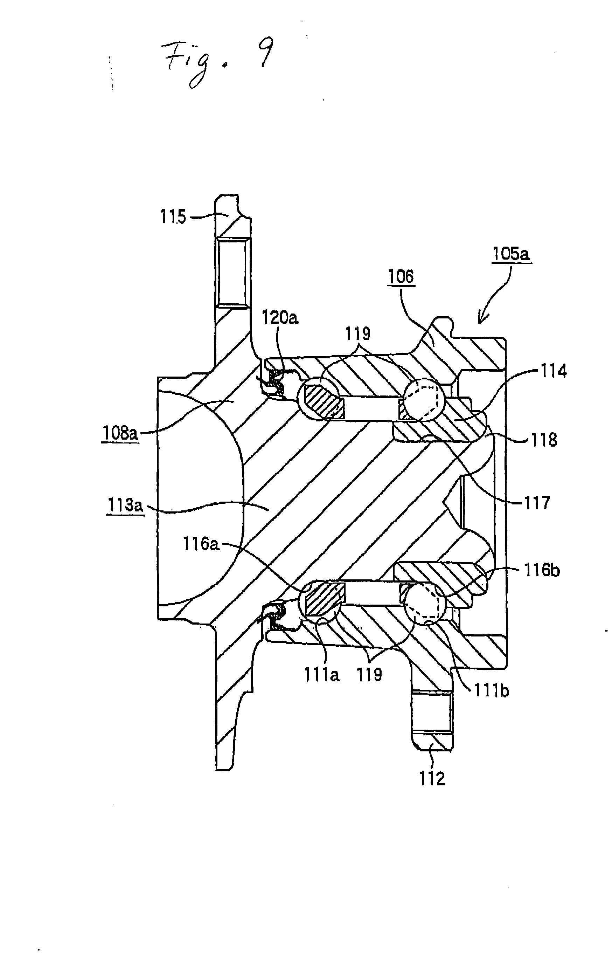

In addition, the hub 108 is made up of a hub main body 113 and an inner ring 114. Of these, a mounting flange 115 is formed on part of an outer circumferential surface of the hub main body 113 in a portion which projects from an outer end opening of the outer ring 106. Note that "out" with respect to the axial direction means the left side of Figs. 8, 9 which is an outer side of the bearing unit in a transverse direction of the vehicle with the bearing unit built on the motor vehicle. On the contrary, the right side of Figs. 8, 9 which is a central side of the bearing unit in the transverse direction of the vehicle with the bearing unit built on the motor vehicle means "in" with respect to the axial direction. The wheel 101 and the rotor 102 are connected and fixed to an outer surface of the mounting flange 115 with the studs 109 and nuts 110.

Additionally, an inner ring raceway 116a, which faces the outside outer ring raceway 111a of the double row outer ring raceways 111a, 111b, is formed on the outer circumferential surface of the hub main body 113 in an intermediate portion. In addition, the inner ring 114 is fitted on a small diameter stepped portion 117 formed similarly on an inner end portion. An inner ring raceway 116b, which faces the inside outer ring raceway 111b of the double row outer ring raceways 111a, 111b, is formed on an outer circumferential surface of the inner ring 114. The inner ring 14 configured like this is fixed to the hub main body 113 by a clamping portion 118 which is formed by plastically deforming the inner end portion of the hub main body 113 radially outwards. In addition, double row rolling elements 119, 119 are provided rollably between the outer ring raceways 111a, 111b and the inner ring raceways 116a, 116b, respectively. Note that while in the illustrated example, balls are used as the rolling elements 119, 119, in the case of an automotive hub unit which is heavy in weight, tapered rollers are sometimes used. In addition, openings at ends of the cylindrical space where the rolling elements 119, 119 are installed are hermetically sealed by seal rings 120a, 120a, respectively.

Furthermore, in the illustrated example, since the bearing unit is the wheel supporting hub unit 105 for the drive wheel (the front wheel of an FF vehicle, a rear wheel of an FR or RR vehicle, any wheel of a 4WD vehicle), a spline hole 121 is formed in a central portion of the hub 108. In addition, a spline shaft 123 which is fixedly provided at an outer end face of a constant velocity joint outer ring 122 is inserted into the spline hole 123. In association with this, a nut 124 is thread fitted on a leading end portion of the spline shaft 123, and then by fastening the nut 124 so fitted, the hub main body 113 is held between the nut 124 and the constant velocity joint outer ring 122.

Next, as a wheel supporting hub unit which has conventionally been known, Fig. 9 shows another hub unit for a driven wheel (a rear wheel of an FF vehicle, a front wheel of an FR vehicle or RR vehicle). Since the wheel supporting hub unit 105 a is for a driven wheel, no spline hole is provided in a central portion of a hub main body 113a which makes up a hub 108a. Note that while in the illustrated example, an inner end face of an inner ring 114 is held by a clamping portion 118 provided at an inner end portion of the hub main body 113a, the inner end face of the inner ring 114 can also be held by a nut which is thread fitted on the inner end portion of the hub main body 113a. In this case, an external thread portion, on which the nut is to be thread fitted, is provided at the inner end portion of the hub main body 113a. The construction and function of the other portions are similar to those of the wheel supporting hub unit 105 which has been described before.

Incidentally, in the case of either of the constructions of the wheel supporting hub units 105, 105a which are configured as have been described above, a connecting flange 112 and a mounting flange 115 are formed on an outer circumferential surface of the outer ring 106 and an outer circumferential surface of the hub main body 113, 113a, respectively. As a method for manufacturing the outer ring 106 or the hub main body 113, 113a on the outer circumferential surface of which the connecting flange 112 or the mounting flange 115 is formed in such a manner as to project radially therefrom, cutting is considered in addition to the plastic forming such as hot forging or cold forging.

However, in order to realize a cost reduction by improving working efficiency and securing the yield of material, plastic forming is preferably used. In addition, in the plastic forming, since the hot forging enables work to be worked in a soft state, the forming load is suppressed to a small level. On the contrary, since the extent, to which the metal materials in the constituent components are hardened, is limited (does not surpass such an extent that the hardness increases as the temperature decreases) even after the metal materials are cooled after the completion of working, a sufficient strength may not always be obtained. In addition, since a difference in thermal expansion between forging dies needs to be taken into consideration, it becomes difficult to secure dimension accuracy and shaping accuracy. On the other hand, the strength of the base of the connecting flange 112 formed on the outer circumferential surface of the outer ring 106 or the base of the mounting flange 115 formed on the outer circumferential surface of the main body 113a needs to be secured in order to prevent the occurrence of harmful deformation thereat whether or not a moment is exerted thereto when in use. When the outer ring 106 or the hub main body 113, 113a is formed through the hot forging, it becomes difficult to give a required strength to the base of the connecting flange 12a or the mounting flange 115 in the event that the base is left as it is. Because of this, a separate operation needs to be performed in order to increase the strength of the base, this increasing the manufacturing costs of the outer ring 106 or the hub main body 113, 113a.

In addition, with the hot forging, since the dimension accuracy becomes rough and a decarburized layer needs to be removed from the thermally treated portion, a large cutting allowance for a posterior step becomes necessary, and hence, the hot forging approach has had the problem of increased manufacturing costs.

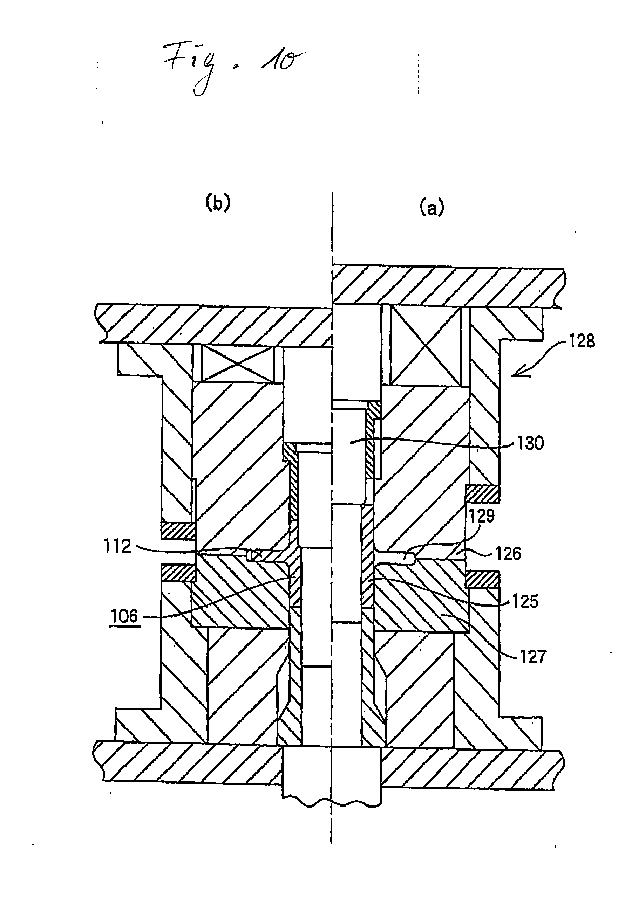

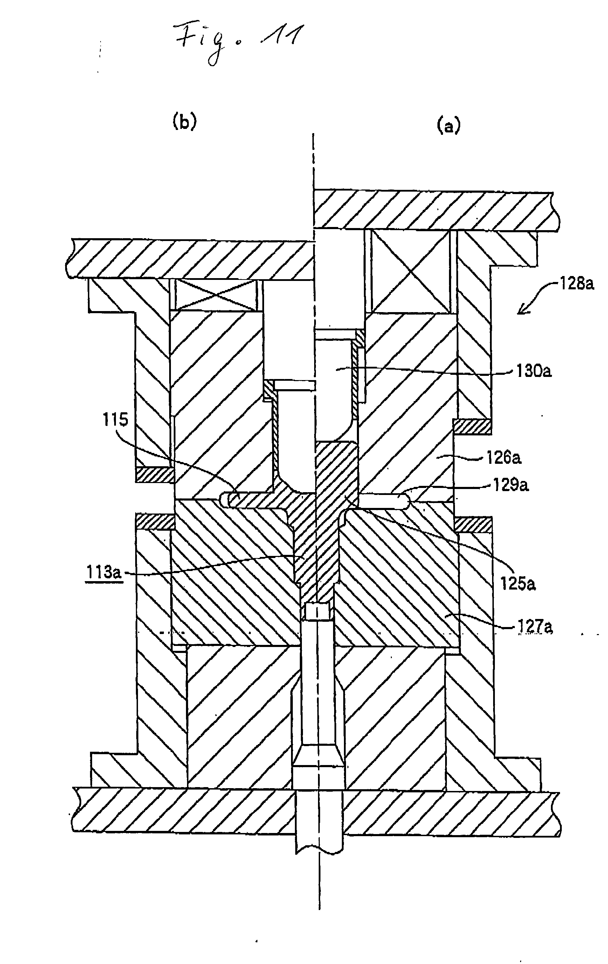

In contrast to this, as is described in Patent Document No. 3, it is considered to manufacture an outer ring 106 or a hub main body 113, 113a having on its own outer circumferential surface a connecting flange 112 or a mounting flange 115 through a side extrusion which is one of cold forging approaches. Figs. 10 to 11 show states in which an outer ring 106 or a hub main body 113a which is a raceway ring member for a bearing unit is manufactured through such a side extrusion as described in Patent Document No. 3. Note that Fig. 10 shows the state in which the outer ring 106 which makes up the wheel supporting rolling element bearings 105, 105a for a drive wheel which are shown in Figs. 8 to 9 is formed and Fig. 11 shows the state in which the hub main body 113a which makes up the wheel supporting rolling element bearing 105a for a driven wheel which is shown in Fig. 9 is formed.

In either of the cases, a material 125, 125a of which an outer circumferential surface is made into a cylindrical surface or a stepped cylindrical surface is set within a mold 128, 128a which is made up of an upper die 126, 126a and a lower die 127, 127a which have inner surface configurations matching an outer surface configuration of the connecting flange 12 or the mounting flange 15. In this state, portions of the outer circumferential surface of the material 125, 125a which exclude a portion where the connecting flange 112 or the mounting flange 115 is to be formed are held. On the other hand, a space 129, 129a which matches the flanges 112, 115 exists around the perimeter of the portion where the connecting flange 112 or the mounting flange 115 is to be formed. In the event that the material 125, 125a is pressed axially (the axial dimension is contracted) by a punch 130, 130a in this state, the metal material which has then nowhere to escape as the axial dimension shortens is pushed into the space 129, 129a, whereby the connecting flange 112 or the mounting flange 115 is eventually formed on part of the outer circumferential surface.

In the event that the outer ring 106 or the hub main body 113a which includes the connecting flange 112 or the mounting flange 115 is manufactured through the side extrusion that has been described above, the strength of the base of the connecting flange 112 or the mounting flange 115 which is formed on the outer circumferential surface of the outer ring 106 or the hub main body 113a can be increased. Namely, since the connecting flange 112 or the mounting flange 115 including the base is work hardened, the necessity of a posterior treatment to increase the strength of the base is obviated, or even though such a posterior treatment is necessary, a simple posterior treatment will suffice, and hence, a reduction in manufacturing costs of the outer ring 106 or the hub main body 113a is realized. In addition, since the difference in thermal expansion between the forging dies does not have to be taken into consideration, the dimension accuracy and shaping accuracy are easy to be secured, and the posterior working can be simplified or omitted, thereby making it possible to realize the reduction in manufacturing costs from this aspect.

However, in order to increase further the strength of the base of the connecting flange 112 or the mounting flange 115 with a view to realizing a reduction in weight or the like, there still remains a room for improvement even with the manufacturing method described in Patent Document No. 3 that has been described above. Namely, as is widely known in the field of automotive technologies, in order to realize an increase in driving performance centered at riding comfort, steering stability and the like or fuel economy, it is effective to reduce the so-called unsprung load which is the weight of the members which lie closer to the road surface than the spring which makes up the suspension system. Needless to say, the outer ring 106 or the hub main body 113a which includes the connecting flange 112 or the mounting flange 115 constitutes the unsprung load, and reducing the weight of the outer ring 106 or the hub main body 113a (as well as the hub main body 113) even slightly becomes very advantageous from the viewpoint of increasing the aforesaid performances.

In order to enable a reduction in thickness of the connecting flange 112 or the mounting flange 115 with a view to reducing the weight of the outer ring 106 or the hub main body 113, 113a, it becomes advantageous to increase the strength of the connecting flange 112 or the mounting flange 115, in particular, the strength of the base to which a large moment is exerted while the vehicle is turning. From this viewpoint, the manufacturing method described in Patent Document No. 3 above still has the room for improvement.

In addition, in the case of a bearing unit of this type, a wheel mounting surface of the connecting flange 12 or a vehicle body mounting surface of the mounting flange 115 needs to be finished with good flatness accuracy in order to secure runout accuracy. In the related art disclosed in Patent Document No. 3, finishing the mounting surface with good flatness accuracy is designed to be implemented by cutting.

However, when attempting to finish the mounting surface by cutting, since conventionally, the whole area of the mounting surface of the mounting flange 112 or the connecting flange 115 was such as to be brought into abutment with the wheel or the vehicle body, the whole area of the mounting surface needed to be cut. Consequently, a problem has still remained that should be solved with respect to the manufacturing costs of the flanged raceway ring member (time related manufacturing costs or labor-hour related manufacturing costs).

Patent Document No. 1: Japanese Patent Unexamined Publication JP-A-2005-256897
Patent Document No. 2: Japanese Patent Unexamined Publication JP-A-2003-25803
Patent Document No. 3: Japanese Patent Unexamined Publication JP-A-2006-111070

### Disclosure of the Invention

### Problem that the Invention is to Solve

The invention has been made in view of the situations, and an object thereof is to realize a construction and a manufacturing method and apparatus for obtaining a light bearing member for a bearing unit and a bearing unit for low costs.

### Means for Solving the Problem

According to the invention, there is provided a method of manufacturing a metallic raceway ring member for a bearing unit as defined in claim 1. A preferred embodiment of said method is set out in claim 2.

### Advantage of the Invention

According to the inventive bearing unit raceway ring member , the inventive bearing unit, the inventive bearing unit raceway ring member manufacturing method, and the inventive manufacturing apparatus, the light bearing unit raceway ring member and the bearing unit can be obtained for low costs. Namely, since the flange is formed on the outer circumferential surface of the bearing unit raceway ring member by the side extrusion which is the cold plastic forming, the forming efficiency is improved and the yield of material is secured, thereby making it possible to realize a reduction in costs. In addition, since the hardness of the flange is increased higher than the hardness of the material due to work hardening in association with the cold plastic forming, it becomes easy to secure the strength of the flange. Moreover, in the case of the invention, since the work hardened layer which is formed by changing the outside diameter of the material is made to exist on a surface layer portion of at least the base of the flange, the strength of the base of the flange can be increased further, whereby by increasing the strength of the flange sufficiently, the thickness of the flange is reduced so as to facilitate the realization of a reduction in weight of the bearing unit raceway ring member and hence a reduction in weight of the bearing unit.

### Brief Description of the Drawings

[Fig. 1] Sectional views and an end view showing a first example of an embodiment of the invention in the order of forming steps.
[Fig. 2] An enlarged view of a portion X in Fig. 1.
[Fig. 3] A sectional view showing a state in which a side extrusion is carried out in the first example.
[Fig. 4] An enlarged view of a portion Y in Fig. 3.
[Fig. 5] Sectional views and an end view showing a second example of the embodiment of the invention in the order of forming steps.
[Fig. 6] (a) is a sectional view showing the configuration of a bearing unit for a drive wheel, and (b) is a sectional view showing the configuration of a bearing unit for a driven wheel.
[Fig. 7] (a) is a sectional view showing a hub for a drive wheel and one of raceway rings in an exploded fashion, and (b) is a sectional view showing a hub for a driven wheel and one of raceway rings in an exploded fashion.
[Fig. 8] A sectional view showing another example of a wheel supporting hub unit for a drive wheel with the hub unit assembled on a knuckle.
[Fig. 9] A sectional view showing another example of a wheel supporting hub unit for a driven wheel with the hub unit assembled on a knuckle.
[Fig. 10] A sectional view showing a state in which an outer ring which makes up a wheel supporting bearing unit is manufactured by a conventionally known side extrusion process by a state immediately before the start of the process and a state immediately after the completion of the process.
[Fig. 11] A sectional view showing a state in which a hub main body which makes up a wheel supporting bearing unit for a driven wheel is manufactured by a conventionally known side extrusion process by a state immediately before the start of the process and a state immediately after the completion of the process.

### Description of Reference Numerals

2, 106, outer ring (one of raceway rings, outside diameter side raceway ring member);
2a, 112, 204c connecting flange;
2s, 111a, 111b outer ring raceway;
4, 108, 108a, 201 hub (the other raceway ring);
4s, 116a, 116b inner ring raceway;
6, 8, 119 rolling element;
12, 113, 113a, hub main body (the other raceway ring member, inside diameter side raceway ring member);
12a, 115, 202c mounting flange;
12c axial end portion (clamping area) of the other raceway ring member;
101 wheel;
102 rotor;
103 knuckle;
104 supporting hole;
105, 105a wheel supporting hub unit;
107 bolt;
109, stud (bolt);
110 nut;
114 inner ring;
117 small diameter stepped portion;
118 clamping portion;
120a, 120b seal ring;
121 spline hole;
122 constant velocity joint outer ring;
123 spline shaft;
124 nut;
125, 125a material;
126, 126a, 126b upper die;
127, 127a lower die;
128, 128a mold;
129, 129a space;
130, 130a punch;
131 first intermediate material;
132 small diameter cylindrical portion;
133 large diameter cylindrical portion;
134 inclined portion;
135 second intermediate material;
136, 136a third intermediate material;
137 die;
138 upper plate;
139 elastic structure body;
140 lower plate;
141 flange forming space;
142 lower recessed portion;
143 upper recessed portion;
144 large diameter cylindrical surface portion;
147 recess;
148 positioning cylindrical portion;
148a small diameter portion;
148b stepped portion;
148c large diameter portion;
149 knock-out pin;
150 material;

### Best Mode for Carrying out the Invention

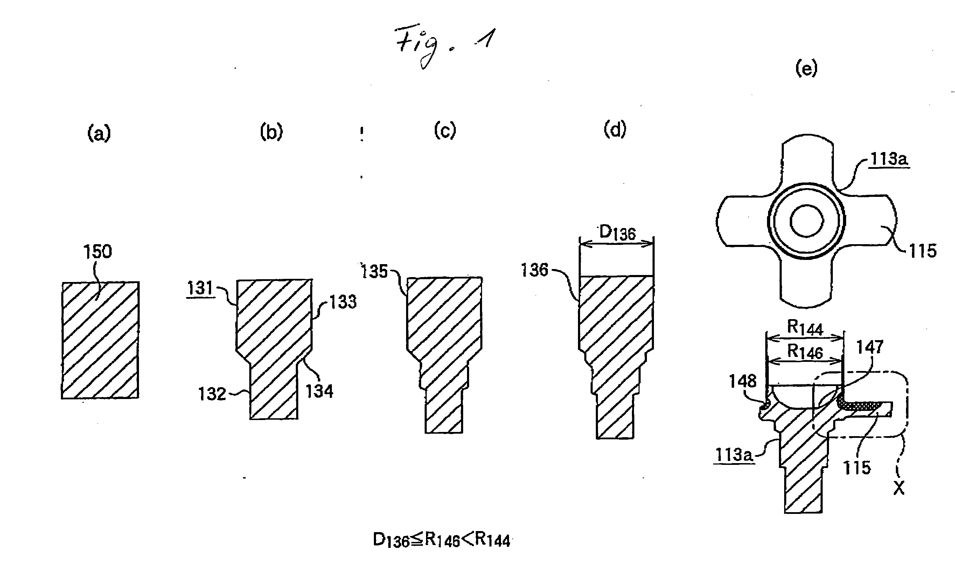

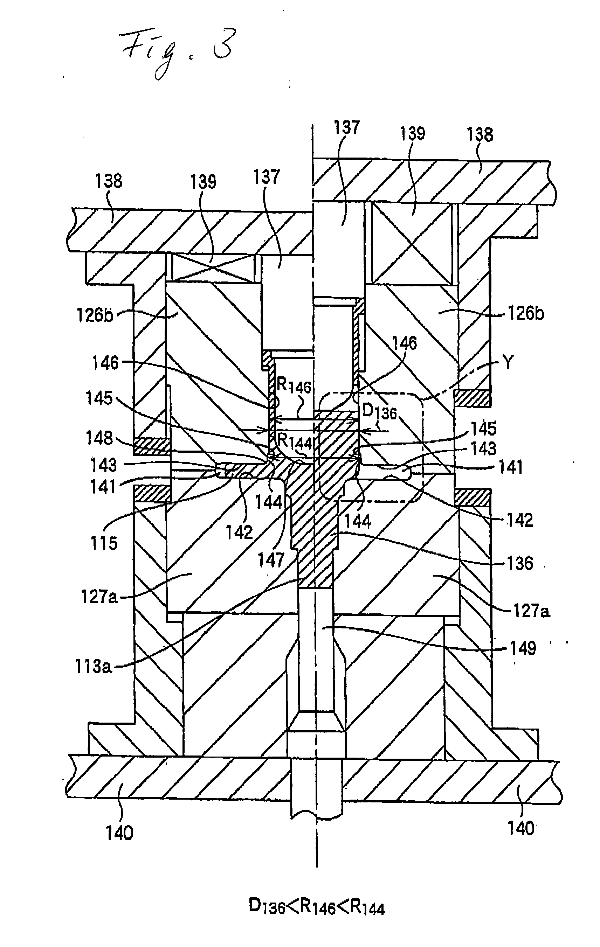

Next, a first example of the inventive bearing unit according to the invention will be described by reference to Figs. 1 to 4. This embodiment is intended to manufacture a hub main body (the other raceway ring member) 113a which makes up a wheel supporting bearing unit for driven wheel as shown in Fig. 9 described before by a manufacturing method of the invention. In addition, although Fig. 3 shows a state in which a side extrusion process is implemented, in Fig. 3, a right-half portion shows a state immediately before the start of the process, while a left-half portion shows a state immediately after the completion of the process.

To manufacture the hub main body 113a by a manufacturing method of this embodiment, firstly, a first-stage forward extrusion is performed on a cylindrical material 150 shown in Fig. 1(a), so as to obtain a stepped first intermediate material 131 as shown in Fig. 1(b). The forward extrusion, which is one of cold plastic forming methods, is implemented by pushing the material 150 into a receiving die having an inner circumferential configuration which matches an outer circumferential configuration of the first intermediate material 131 by a die. The forward extrusion can also be implemented by a general method known in the metal processing field. In addition, when a ratio of an outside diameter of a small diameter cylindrical portion 132 and an outside diameter of a large diameter portion 133 of the first intermediate material 131 is large or an inclination angle of an inclined portion 134 between those two cylindrical portions 132, 133 is steep, a floating die is used which moves together with the material 150 in an axial direction. Namely, the material 15 is pushed into the receiving die while holding an outer circumferential surface of the material 150 by the floating die (in such a manner as not to expand the outside diameter). Since a forward extrusion process using the floating die is disclosed in detail in Japanese Patent Application No. 2005-354469 and the process has nothing to do with the gist of the invention, the illustration and detailed description thereof will be omitted here.

A second-stage forward extrusion is performed on the first intermediate material 131, so as to make the material 131 into a second intermediate material 135 as shown in Fig. 1(c). This second-stage forward extrusion is performed basically in a similar way to that in which the first-stage forward extrusion is performed. Needless to say, the receiving die has to have a different inner circumferential configuration which matches an outer circumferential configuration of the second intermediate material 135. In addition, the floating die is used as required.

Next, a step-forming process for forming a stepped portion to provide an axially outboard angular type inner ring raceway 116a (refer to Fig. 9) and an upsetting process are performed on the second intermediate material 135, so as to make the second intermediate material 135 into a third intermediate material 136 as shown in Fig. 1(d). This third intermediate material 136 corresponds to the material 125a shown in the right-half portion of Fig. 21 that has been described before. The step-forming process and the upsetting process, which are performed to obtain the third intermediate material 136 from the second intermediate material 135, are implemented by pressing the second intermediate material between the receiving die and the die while holding an outer circumferential surface of the second intermediate material 136 with a die. Since these step-forming process and upsetting process are such as to be easily performed by metal processing engineers and have nothing to do with the gist of the invention, the illustration and detailed description thereof will be omitted here.

When the third intermediate material 136 is obtained, the third intermediate material 136 is used as the "material" of the invention. Then, a side extrusion process and a process for forming the inner ring raceway 116a are performed on the third intermediate material 136 (the material), so as to obtain a hub main body 113a as shown in Fig. 1(e). the side extrusion process is performed basically by a method described in Patent Document No. 3 that has been described before. Namely, as is shown from the "right-half portion" to the "left-half portion" of Fig. 3, the third intermediate material 136 is pressed axially by a die 137 in such a state that the material 136 is held inside an upper die 126b and a lower die 127a in such a manner as to cause the metal material to escape radially outwards (caused to so flow), to thereby form a mounting flange 115. However, by devising part of an inner circumferential configuration of the upper die 126 (differentiating the inner circumferential configuration from the case of the invention described in Patent Document No. 1), a surface layer portion of a proximal end portion of the mounting flange 115 on the hub main body 113a is made to become hard sufficiently by virtue of work hardening. Hereinafter, firstly, the construction of a processing apparatus will be described.

The upper die 126b is supported below an upper plate 138 which is fixed to a ram of a press machine via an elastic structure body 139 such as a rubber, metallic spring, hydraulic cylinder and air cylinder, and the die 137 is fixed to a lower surface of the upper plate 138. In addition, the lower die 127a is fixed above a lower plate 140 which is fixed to a base of the press machine. Then, in such a state that a lower surface of the upper die 126b and an upper surface of the lower die 127a are in abutment with each other, a flange forming space 141 having an inner surface configuration which matches an outer surface configuration of the mounting flange 115 is made to be formed between the lower and upper surfaces. Namely, a lower recess 142 having a configuration corresponding to an axially inward half portion of the mounting flange 115 is formed on the upper surface of the lower die 127a, while an upper recess 143 having a configuration corresponding to an axially outward half portion of the mounting flange 115 is formed on the lower surface of the upper die 126b. Then, the flange forming space 141 is made to be defined in such a state that a portion on the upper surface of the lower die 127a which lies closer to an outside diameter side thereof and a portion on the lower surface of the upper die 126b which lies closer to an outside diameter side thereof are in abutment with each other with phases of both the recesses 142, 143 made to match each other.

In particular, in the case of the manufacturing apparatus used in this embodiment, a large diameter cylindrical surface portion 144, a stepped portion 145 and a small diameter cylindrical surface portion 146 are formed in a portion lying above the upper recess 143 by an inner circumferential surface of the upper die 126b. Namely, the large diameter cylindrical surface portion 144 is provided in the position just above the upper recess 143, the stepped portion 145 is formed in the position just above the large diameter cylindrical surface portion 144, and the small diameter cylindrical surface portion 146 is formed in the position just above the stepped portion 145. In addition, an inside diameter R₁₄₄ of the large diameter cylindrical surface portion 144 is larger than an outside diameter D₁₃₆ of an upper half portion, having a largest outside diameter, of the third intermediate material 136, which is to constitute the material (R₁₄₄ > D₁₃₆). In addition, an inside diameter R146 of the small diameter cylindrical surface portion R₁₄₆ is equal to or slightly larger than the outside diameter D₁₃₆ of the upper half portion (R₁₄₆ ≥ D₁₃₆). Furthermore, the stepped portion 145 is formed into an inclined stepped portion or to have a complex arc cross section in such a manner that the inside diameter gradouble rowly increases as it extends from the small diameter cylindrical surface portion 146 to the large diameter cylindrical surface portion 144 in order to realize a smooth continuous connection between the cylindrical surface portions 144, 146. In this way, the reason that the configuration of the stepped portion 145 is made smooth is that the configuration of a stepped portion is made smooth which is formed on an outer circumferential surface of a positioning cylindrical portion 148 in association with the stepped portion 145.

The operation will be performed as follows in which the third intermediate material 136 is plastically deformed to form the mounting flange 115 and is then formed into the hub main body 113a (or a fourth intermediate material having a configuration close to the hub main body 113a) shown in Fig. 1(e). Firstly, in such a state that the upper die 126b and the die 137 are raised together with the ram, a leading half portion (a lower half portion) of the third intermediate material 136 is inserted into a center hole in the lower die 127a, so as to be set in the lower die 127a. Following this, the upper die 126b and the lower die 127a are lowered together with the ram, so as to hold the third intermediate material 136 inside the upper die 126b and the lower die 127a as shown in the right-half portion of Fig. 8. From this state, the die 137 is lowered together with the ram, and the metal material constituting the third intermediate material 136 is caused to flow into the flange forming space 141 so as to form the mounting flange 115, while forming a recess 147 on a proximal end face of the third intermediate material 136. In addition, a peripheral portion of the recess 147 is made to constitute a positioning cylindrical portion 148 on which center holes in a disc of a disc brake and a wheel for a road wheel are fitted when in use.

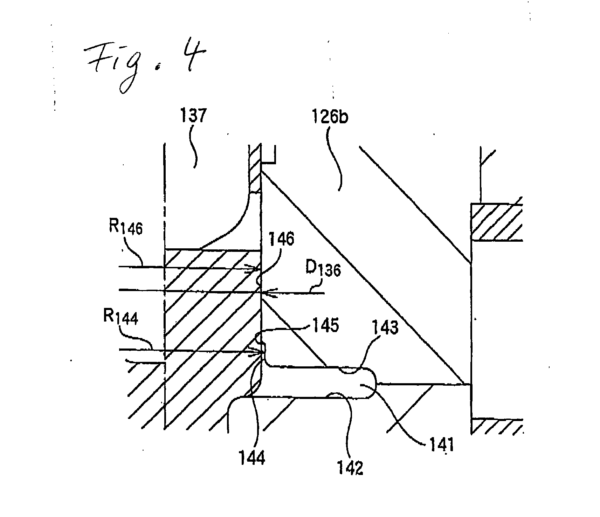

By this, as shown in Fig. 4, the positioning cylindrical portion 148 of the hub main body 113a is formed into a stepped configuration in which a small diameter portion 148a which lies at an axial end side and a large diameter portion 148c which lies at a mounting flange side so as to continue to the mounting flange 115 are connected continuously to each other by a stepped portion 148b.

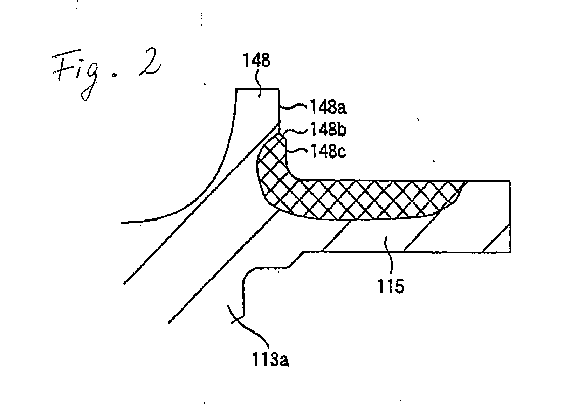

In this way, in the process in which the third intermediate material 136 is formed into the hub main body 113a (or the fourth intermediate material) while being deformed plastically, part of the metal material making up the third intermediate material 136 moves from the small diameter cylindrical surface portion 146 towards the large diameter cylindrical surface portion 144. In this moving process, the outside diameter is expanded by passing through the stepped portion 145, and at least the surface layer portion is work hardened. Following this, the work hardened portion sequentially enters the flange forming space 141. The part of the metal material is work hardened also when it enters the interior of the flange forming space 141. Because of this, the metal material which enters the flange forming space 141 to form the mounting flange 115 is deformed plastically twice to be work hardened; when it moves from the small diameter cylindrical surface portion 146 to the large diameter cylindrical surface portion 144, and when it enters the flange forming space 141. Then, a portion which has been subjected to work hardening twice (a portion shaped in Fig. 1(e) and 2) resides in a portion which is to constitute a base of the mounting flange 15, that is, a radially inward portion on an axially external surface of the mounting flange 115, an outer circumferential surface of the positioning cylindrical portion 148 and a bent portion which connects continuously these surfaces. In other words, the surface layer portion of at least the portion which is to constitute the base is made up of the portion which has been subjected to work hardening twice.

Consequently, even in the event that the thickness dimensions of the positioning cylindrical portion 148 and the mounting flange 115 are suppressed to small dimensions, a required strength can be secured, and the aforesaid advantage can be obtained. Namely, the highly strong (light in weight while securing the required strength) hub main body 113a is manufactured while ensuring the function and advantage that the mounting flange 115 can easily be formed by the side extrusion. In addition, when the side extrusion is performed in the way described above, the forming load is increased by such an extent that the work hardened layer is produced in part of the third intermediate material 136 in the midst of the forming process based on the part of the metal material passing through the stepped portion 145 (by such an extent that the work hardened portion is pushed into the flange forming space 141). However, since the work hardened layer exists partially and moreover, the thickness of the work hardened layer is limited, the increase in forming load can slightly be suppressed. Namely, although the third intermediate material 136 needs to be caused to flow radially outwards while bending the work hardened layer when the third intermediate material 136 is plastically deformed into the hub main body 113a shown in Fig. 1(e), an increase amount in forming load needed when the material is bent and caused to flow only has to be small. Because of this, an increase in load given to the respective dies such as the upper die 126b, the lower die 127a and the die 137 can be suppressed to a small level, whereby a reduction in mold life can be made small.

The hub main body 113a (or the fourth intermediate material having the configuration close to the hub main body 113a) that is obtained in the way described above is taken out from the side extrusion mold shown in Fig. 3 to be transferred to the following step and is then combined with other members (after finishing such as grinding and heat treatment has been performed thereon as required) so as to be made into a wheel supporting hub unit 105a shown in Fig. 9 that has been described before. In addition, the operation of taking out the hub main body 113a from the side extrusion mold is implemented by raising a knock-out pin 149 provided in a central portion of the lower die 127a after having raised the upper die 126b and the die 137 together with the ram and pushing out the hub main body 113a from the central hole in the lower die 127a.

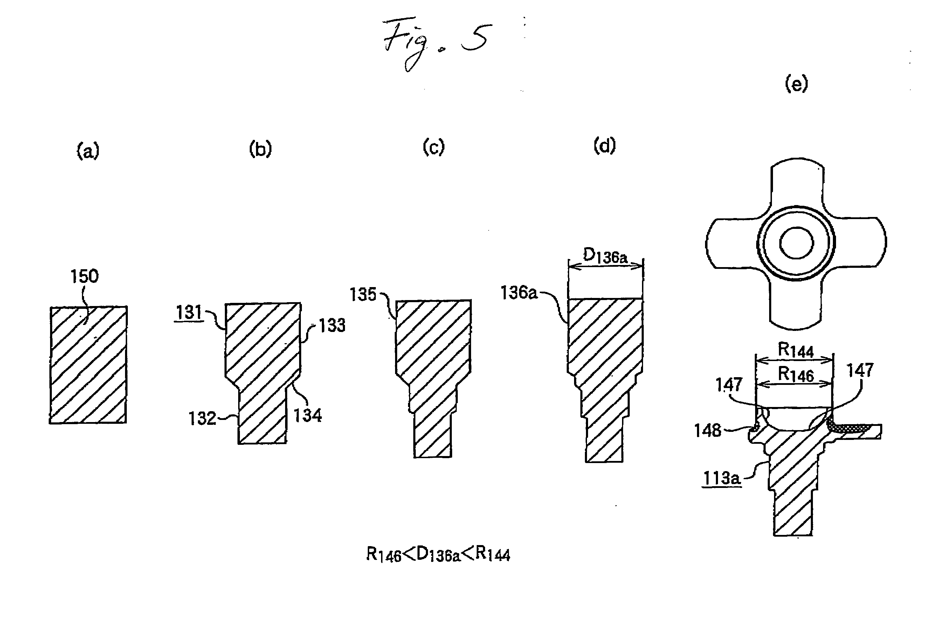

Next, a second example of the inventive bearing unit will be described by reference to Fig. 5. Fig. 5 shows, as with Fig. 1 that has been described before, a manufacturing method for manufacturing a hub main body 113a (or a fourth intermediate material having a configuration close to the hub main body 113a) by plastically deforming a cylindrical material 150 in order of occurrence of forming steps. A configuration and construction shown in the figure are the same as those shown in Fig. 1. In the case of this embodiment, however, an outside diameter D₁₃₆ₐ of an upper half portion of a third intermediate material 136a shown in Fig. 5(d) which has a largest outside diameter and which is to be formed into a positioning cylindrical portion 148 is made larger than the outside diameter D₁₃₆ of the first example (D₁₃₆ₐ > D₁₃₆). Specifically, the outside diameter R₁₃₆ₐ of the upper half portion is made larger than an inside diameter R₁₄₆ of a small diameter side cylindrical surface portion 146 on an inner surface of an upper die 126b which makes up a manufacturing apparatus but smaller than an inside diameter R₁₄₄ of a large diameter side cylindrical surface portion 144 on the same inner surface on the same upper die (R₁₄₄ > D₁₃₆ₐ > R₁₄₆).

When performing a side extrusion to form the third intermediate material 136a that has been described above into the hub main body 113a (or the fourth intermediate material), an upper end portion of the third intermediate material 136a is press fitted into the small diameter side cylindrical surface portion 146 (refer to Figs. 8 to 9) of the upper die 126b. This press fitting operation is implemented by inserting a lower half portion of the third intermediate material 136a into the lower die 127a (refer to Fig. 8) and thereafter lowering the upper die 126b. Consequently, in the case of this embodiment, in the state shown in the right-half portion of Fig. 8, the upper end portion of the third intermediate portion 136a is handled at the small diameter side cylindrical surface portion 146 of the upper die 126b, whereby a work hardened layer is formed on a surface layer portion of this upper end portion.

In the case of this embodiment, since a process which is similar to one in the third embodiment that has been described above is performed from this state, a state is produced in which a portion which has been subjected to work hardening three times (a shaded portion in Fig. 5(e)) is made to exist in a portion which is to constitute a base of a mounting flange 115 which will be formed on an outer circumferential of the hub main body 113a. Because of this, the hardness of this portion is increased further, so as to realize a further reduction in thickness and weight. Since the configuration and function of other portions are similar to those of the third embodiment, the illustration and description thereof will be omitted which will repeat what has been done before.

In addition, in the third and fourth embodiments, the volume of the circular pillar-like or cylindrical material used has to be larger than the volume of a finished raceway ring member. However, even in a case where the volume of the material is made larger than the volume of the raceway ring member, the degree at which the former volume is made larger than the latter volume is preferably made as small as possible (preferably zero, that is, the volume of the material is made equal to the volume of the raceway ring member) from the viewpoint of increasing the yield of the material and facilitating a posterior process (reducing the processing time by suppressing the machining allowance).

In addition, since the properties of the surface of the material appear as they are as the properties of the surface of the finished raceway ring member, a defect such as an oxide layer, rust or damage should not be present on the surface of the material. On the other hand, in order to facilitate cold plastic forming (cold forging), the material needs to be annealed before being subjected to plastic forming, and it is inevitable for an oxide layer to be formed on the surface by the annealing so given. When taking this into consideration, it is preferable to anneal a long section (a bar material) from which the cylindrical material is obtained, thereafter remove an oxide layer produced on an outer circumferential surface of the long section by polishing, barreling, shot peening or the like and then cut the long section to a predetermined dimension from the viewpoint of obtaining a material in good quality which has no oxide layer on the surface thereof.

However, in the event that removing the oxide layer on the outer circumferential surface of the long section is difficult due to forming costs, polishing is applied to the outer circumferential surface of a short section obtained by cutting the long section of which the outer circumferential surface is covered with the oxide layer, so as to obtain the material. In this case, the oxide layer can be removed by polishing by a through feed centerless grinder. In addition, in the case of the material being formed into a cylindrical shape, since removing an oxide layer formed on an inside diameter side of the long section is difficult, the oxide layer on the inner circumferential surface needs to be removed from the short section obtained by cutting the long section. In this case, whether or not annealing is performed prior to cutting does not matter. In either case, as a method of cutting the long section, it is preferable from the viewpoint of securing accuracy to cut it by a lathe. However, when performing the removing operation of the oxide layer after cutting, the long section may be cut with a saw, provided that the properties of a cut surface can be normalized by causing media for barreling or shots for shot peening.

In addition, the third and fourth embodiments of the invention can be applied to not only the hub main body for a driven wheel that is shown in the figure but also, for example, the hub main body for a drive wheel shown in Fig. 1 or the outer ring shown in Figs. 1 to 3, provided that the raceway ring member formed is a bearing member having a projecting portion (a flange) formed on part of an outer circumferential surface thereof in such a manner as to project radially outwards.

## Claims

1. A method of manufacturing a metallic raceway ring member (113a) for a bearing unit, the metallic raceway ring member (113a) comprising:
a radially projecting flange (115) provided on an outer circumferential surface thereof,
a positioning cylindrical portion (148) provided on the outer circumferential surface in a portion which lies at an axial end portion of the raceway ring member (113a) projecting further than an axial end side of the flange (115), and
a raceway surface (116a) on the circumferential surface,
wherein the positioning cylindrical portion (148) and the flange (115) are formed by plastic forming through cold pressing;
using an apparatus comprising:
an upper die (126b) having a lower surface on which an upper recess (143) is formed, and
a lower die (127a) having an upper surface on which a lower recess (142) is formed, wherein a flange forming space (141) is provided to be recessed radially outwardly in a portion between the lower surface of the upper die (126b) and the upper surface of the lower die (127a) that are in abutment with each other and where the flange (115) is to be formed;
the method comprising:
preparing a metallic material (136) whose outer circumferential surface is made into a cylindrical surface;
placing the material (136) within the upper die (126b) and the lower die (127a); and
performing side extrusion work of pressing the material (136) axially from the side of a portion which is to make up the positioning cylindrical portion (148) towards the side of the flange forming space (141) so as to cause part of the metallic material (136) which makes up the flange (115) to enter the flange forming space (141) so that the material (136) is plastically deformed so as to form the flange (115) on the outer circumferential surface of the metallic raceway ring member (113a),
**characterized in that**
the upper die (126b) comprises:
a large diameter cylindrical surface portion (144) having an inside diameter (R₁₄₄) which is larger than an outside diameter (D₁₃₆) of the material (136), a stepped portion (145), and
a small diameter cylindrical surface portion (146) having an inside diameter (R₁₄₆) smaller than the large diameter side cylindrical surface portion (144),
wherein the large diameter cylindrical surface portion (144), the stepped portion (145) and the small diameter cylindrical surface portion (146) are provided by an inner circumferential surface of the upper die (126b) sequentially with respect to an axial direction from the side of the flange forming space (141) in a portion lying above the upper recess (143) and adjacent to the flange forming space (141) with respect to the axial direction;
the material (136) is placed within the upper die (126b) and the lower die (127a) in such a state that at least part of a portion of the material (136) which is to make up the positioning cylindrical portion (148) is set inside the small diameter cylindrical surface portion (146); during the side extrusion work,
the part of the material (136) is shifted from an inside of the small diameter cylindrical surface portion (146) to an inside of the large diameter cylindrical surface portion (144) so as to expand an outside diameter to thereby work harden the part of the material (136), and
the work hardened part is shifted to a portion which is to make up a base of the flange (115) and is work hardened again, so that a surface layer portion of at least the portion which is to make up the base is made up of a part of the material (136)
that has been work hardened twice; and
that the positioning cylindrical portion (148) is formed into a stepped configuration having:
a small diameter portion (148a) which lies at an axial end side,
a stepped portion (148b), and
a large diameter portion (148c) which lies at a side of the flange (115) to continue to the flange (115), wherein the small diameter portion (148a) and the large diameter portion (148c) are made to continue via the stepped portion (148b).

2. The method as set forth in Claim 1, wherein
on the inner circumferential surface of the upper die (126b), the inside diameter of the small diameter side cylindrical surface portion (146) is formed smaller than the outside diameter (D₁₃₆) of the portion of the material (136) which is to make up the positioning cylindrical portion (148), the inside diameter of the large diameter side cylindrical surface portion (144) is formed larger than the outside diameter (D₁₃₆) of the portion which is to make up the positioning cylindrical portion (148), and
at least part of the portion which is to make up the positioning cylindrical portion (148) is press fitted into the small diameter side cylindrical surface portion (146) and work hardened to thereby place the material (136) in the upper die (126b) and the lower die (127a), so that the surface layer portion of at least the portion which is to make up the base is made up of the part that has been work hardened three times.

## Patentansprüche

1. Verfahren zur Herstellung eines metallischen Laufringelementes (113a) für eine Lagereinheit,
das metallische Laufringelement (113a) umfasst:
einen radial vorspringenden Flansch (115), welcher an dessen äußeren Umfangsfläche vorgesehen ist,
einen zylindrischen Positionierungsabschnitt (148), welcher an dessen äußeren Umfangsfläche in einem Abschnitt vorgesehen ist, der von einem axialen Endabschnitt des metallischen Laufringelementes (113a) weiter vorsteht als eine axiale Stirnseite des Flansches (115), und
eine Laufringfläche (116a) an der Umfangsfläche,
wobei der zylindrische Positionierungsabschnitt (148) und der Flansch (115) durch plastisches Verformen mittels Kaltpressen gebildet werden;
Benutzen einer Vorrichtung, umfassend:
eine obere Form (126b) mit einer unteren Oberfläche, an welcher eine obere Aussparung (143) ausgebildet ist, und
eine untere Form (127a) mit einer oberen Oberfläche, an der eine untere Aussparung (142) ausgebildet ist,
wobei ein vertiefter den Flansch bildender Raum (141) in dem der Flansch (115) gebildet wird vorgesehen ist, welcher radial außerhalb in einem Abschnitt zwischen der in Anlage miteinander stehenden unteren Oberfläche der oberen Form (126b) und der oberen Oberfläche der unteren Form (127a) vorgesehen ist;
das Verfahren umfasst:
Herstellen eines metallischen Materials (136), dessen Außenumfangsfläche zu einer zylindrischen Oberfläche geformt ist; Anordnen des Materials (136) innerhalb der oberen Form (126b) und der unteren Form (127a); und
Ausführen einer seitlichen Extrusionsarbeit mittels axialen Pressens des Materials (136) von einer Seite eines Abschnittes, welcher den zylindrischen Positionierungsabschnitt (148) bilden soll hin zu einer Seite des den Flansch bildenden Raums (141), so dass ein Teil des metallischen Materials (136) aus dem der Flansch (115) gebildet wird in den den Flansch bildenden Raum (141) eintritt, so dass sich das Material (136) plastisch verformt, um so den Flansch (115) an der äußeren Umfangsfläche Laufringelementes (113a) zu bilden,
**dadurch gekennzeichnet, dass**
die obere Form (126b) aufweist:
einen zylindrischen Oberflächenabschnitt (144) mit einem großen Durchmesser, welcher einen Innendurchmesser (R₁₄₄) aufweist, der größer als ein Außendurchmesser (D₁₃₆) des Materials (136) ist,
einen gestuften Abschnitt (145), und
einen zylindrischen Oberflächenabschnitt (146) mit einem kleinen Durchmesser, welcher einen Innendurchmesser (R₁₄₆) aufweist, der kleiner als derjenige des zylindrischen Oberflächenabschnitts (144) mit dem großen Durchmesser ist,
wobei der zylindrische Oberflächenabschnitt (144) mit dem großen Durchmesser, der gestuften Abschnitt (145) und der zylindrische Oberflächenabschnitt (146) mit dem kleinen Durchmesser, von einer inneren Umfangsfläche der oberen Form (126b) bereitgestellt werden, der Reihe nach mit Bezug auf eine axiale Richtung von der Seite des den Flansch bildendenden Raums (141), in einem Bereich der oberhalb der oberen Aussparung (143) liegt und in Bezug auf die axiale Richtung angrenzt an den den Flansch bildenden Raum (141);
das Material (136) innerhalb der oberen Form (126b) und der unteren Form (127a) in einem solchen Zustand angeordnet wird, sodass zumindest ein Bereich des Materials (136), welches den zylindrischen Positionierungsabschnitt (148) bildet im Inneren des zylindrischen Oberflächenabschnitts (144) mit dem kleinen Durchmesser festgelegt ist;
das während der seitlichen Extrusionsarbeit,
der Teil des Materials (136) von dem Inneren des zylindrischen Oberflächenabschnitts (146) mit dem kleinen Durchmesser zu dem Inneren des zylindrischen Oberflächenabschnitts (144) mit dem großen Durchmesser verschoben wird, um so einen Außendurchmesser zu erweitern, um dadurch den Teil des Material (136) durch Arbeit zu härten, und
der durch Arbeit gehärtete Teil zu einem Bereich verschoben wird, welcher zur Herstellung einer Basis des Flansches (115) dient, und noch einmal durch Arbeit gehärtet wird,
so dass ein Oberflächenschichtabschnitt von zumindest demjenigen Bereich, welcher die Basis bildet aus einem Teil des Materials gebildet wird, welches durch Arbeit zweimal gehärtet wurde; und
dass der zylindrische Positionierungsabschnitt (148) zu einer gestuften Konfiguration umgeformt wird, mit:
einem Abschnitt mit kleinen Durchmessers (148a), welcher an einer axialen Stirnseite liegt,
einem abgestuften Abschnitt (148b), und
einen Abschnitt mit großem Durchmesser (148c), welcher an einer Seite des Flansches (115) liegt und in den Flansch (115) übergeht,
wobei der Abschnitt mit kleinen Durchmesser (148a) und der Abschnitt mit großem Durchmesser (148c) derart gebildet werden, das sich diese über den abgestuften Abschnitt (148b) erstrecken.

2. Verfahren nach Anspruch 1, wobei
auf der inneren Umfangsfläche der oberen Form (126b), der Innendurchmesser des zylindrischen Oberflächenabschnitt (146) mit dem kleinen Durchmesser geringer ist als der äußere Durchmesser (D₁₃₆) des Abschnitt des Materials, welcher den zylindrischen Positionierungsabschnitt (148) bildet,
der Innendurchmesser des zylindrischen Oberflächenabschnitt (144) mit dem großen Durchmesser größer ist als der äußere Durchmesser (D₁₃₆) des Abschnitts, welcher den zylindrischen Positionierungsabschnitt (148) bildet, und
zumindest eine Teil des Abschnitts, welcher den zylindrischen Positionierungsabschnitt (148) bildet zu einem zylindrischen Seiten Oberflächenbereich (146) mit kleinem Durchmesser pressgepasst wird, und durch Arbeit gehärtet, um dadurch das Material (136) in der oberen Form (126b) und der unteren Form (127a) zu platzieren, so dass der Oberflächenschichtabschnitt von zumindest dem Teil, welcher zur Basis umgebildet wird aus dem Teil gemacht ist, welches durch Arbeit dreimal gehärtetem ist.

## Revendications

1. Procédé pour fabriquer un élément de bague de chemin de roulement métallique (113a) pour une unité de palier, l'élément de bague de chemin de roulement métallique (113a) comprenant :
une bride faisant radialement saillie (115) prévue sur sa surface circonférentielle externe,
une partie cylindrique de positionnement (148) prévue sur la surface circonférentielle externe dans une partie qui se trouve au niveau d'une partie d'extrémité axiale de l'élément de bague de chemin de roulement (113a) faisant davantage saillie qu'un côté d'extrémité axiale de la bride (115), et
une surface de chemin de roulement (116a) sur la surface circonférentielle,
dans lequel la partie cylindrique de positionnement (148) et la bride (115) sont formées par formage plastique par pression à froid ;
en utilisant un appareil comprenant :
un moule supérieur (126b) ayant une surface inférieure sur laquelle un évidement supérieur (143) est formé, et
un moule inférieur (127a) ayant une surface supérieure sur laquelle un évidement inférieur (142) est formé,
dans lequel un espace de formage de bride (141) est prévu pour être enfoncé radialement vers l'extérieur dans une partie entre la surface inférieure du moule supérieur (126b) et la surface supérieure du moule inférieur (127a) qui sont en butée entre elles et où la bride (115) doit être formée ;
le procédé comprenant les étapes consistant à :
préparer un matériau métallique (136) dont la surface circonférentielle externe est réalisée dans une surface cylindrique ;
placer le matériau (136) à l'intérieur du moule supérieur (126b) et du moule inférieur (127a) ; et
réaliser un travail d'extrusion latérale consistant à comprimer le matériau (136) axialement à partir du côté d'une partie qui doit composer la partie cylindrique de positionnement (148) vers le côté de l'espace de formage de bride (141) afin d'amener la partie du matériau métallique (136) qui compose la bride (115) à entrer dans l'espace de formage de bride (141) de sorte que le matériau (136) est plastiquement déformé afin de former la bride (115) sur la surface circonférentielle de l'élément de bague de chemin de roulement métallique (113a),
**caractérisé en ce que**
le moule supérieur (126b) comprend :
une partie de surface cylindrique de grand diamètre (144) ayant un diamètre intérieur (R₁₄₄) qui est plus grand qu'un diamètre extérieur (D₁₃₆) du matériau (136),
une partie étagée (145), et
une partie de surface cylindrique de petit diamètre (146) ayant un diamètre intérieur (R₁₄₆) plus petit que la partie de surface cylindrique du côté du grand diamètre (144),
dans lequel la partie de surface cylindrique de grand diamètre (144), la partie étagée (145) et la partie de surface cylindrique de petit diamètre (146) sont fournies par une surface circonférentielle du moule supérieur (126b) de manière séquentielle par rapport à une direction axiale à partir du côté de l'espace de formage de bride (141) dans une partie se trouvant au-dessus de l'évidement supérieur (143) et adjacente à l'espace de formage de bride (141) par rapport à la direction axiale ;
le matériau (136) est placé à l'intérieur du moule supérieur (126b) et du moule inférieur (127a) dans un état tel qu'au moins une partie d'une partie du matériau (136) qui doit composer la partie cylindrique de positionnement (148) est placée à l'intérieur de la partie de surface cylindrique de petit diamètre (146) ;
pendant le travail d'extrusion latérale,
la partie du matériau (136) est déplacée à partir d'un intérieur de la partie de surface cylindrique de petit diamètre (146) jusqu'à un intérieur de la partie de surface cylindrique de grand diamètre (144) afin d'expanser un diamètre extérieur pour écrouir ainsi la partie du matériau (136), et
la partie écrouie est déplacée vers une partie qui doit composer une base de la bride (115) et est à nouveau écrouie, de sorte qu'une partie de couche de surface d'au moins la partie qui doit composer la base est composée d'une partie du matériau (136) qui a été écrouie deux fois ; et
**en ce que** la partie cylindrique de positionnement (148) est formée selon une configuration étagée ayant :
une partie de petit diamètre (148a) qui se trouve au niveau d'un côté d'extrémité axiale,
une partie étagée (148b), et
une partie de grand diamètre (148c) qui se trouve au niveau d'un côté de la bride (115) pour continuer vers la bride (115), dans lequel la partie de petit diamètre (148a) et la partie de grand diamètre (148c) sont réalisées pour continuer via la partie étagée (148b).

2. Procédé selon la revendication 1, dans lequel :
sur la surface circonférentielle interne du moule supérieur (126b), le diamètre intérieur de la partie de surface cylindrique du côté du petit diamètre (146) est plus petit que le diamètre extérieur (D₁₃₆) de la partie du matériau (136) qui doit composer la partie cylindrique de positionnement (148), le diamètre intérieur de la partie de surface cylindrique du côté du grand diamètre (144) est plus grand que le diamètre extérieur (D₁₃₆) de la partie qui doit composer la partie cylindrique de positionnement (148), et
au moins une partie de la partie qui doit composer la partie cylindrique de positionnement (148) est montée à la presse dans la partie de surface cylindrique du côté du petit diamètre (146) et écrouie pour placer ainsi le matériau (136) dans le moule supérieur (126b) et le moule inférieur (127a), de sorte que la partie de couche de surface d'au moins la partie qui doit composer la base est composée de la partie qui a été écrouie trois fois.
